# EUROPÄISCHE PATENTSCHRIFT

(11) **EP 0 832 792 B1**
(45) Veröffentlichungstag und Bekanntmachung des Hinweises auf die Patenterteilung: **24.10.2001**
(21) Anmeldenummer: 97115014.9
(22) Anmeldetag: 29.08.1997
(51) Int. Cl.: B60R 21/20

(54) **Gassack-Abdeckung**
Air bag cover
Couvercle de sac gonflable

(30) Priorität: 26.09.1996 DE 29616823 U
(43) Veröffentlichungstag der Anmeldung: 01.04.1998
(73) Patentinhaber: TRW Occupant Restraint Systems GmbH & Co. KG, 73551 Alfdorf (DE)
(72) Erfinder: Fischer, Anton, 73572 Heuchlingen (DE)
(74) Vertreter: Kitzhofer, Thomas, Dipl.-Ing.

(56) Entgegenhaltungen:
- EP-A- 0 523 882
- US-A- 5 118 132
- US-A- 5 121 942
- US-A- 5 320 380
- US-A- 5 427 408
- US-A- 5 499 842

## Beschreibung

Die Erfindung betrifft eine Gassack-Abdeckung aus nachgiebigem Material, insbesondere aus gespritztem, geschäumtem oder gegossenem Kunststoff, mit wenigstens einem angeformten, abstehenden Befestigungssteg, der wenigstens eine als Durchgangsöffnung ausgebildete Ausnehmung aufweist, in die ein Befestigungsmittel zur Arretierung der Abdeckung am Fahrzeug eingreift.

Bislang übliche Gassack-Abdeckungen bestehen aus einem ein- oder zweikomponentigen gespritzten Kunststoffteil, das an seiner Innenseite einstückig angeformte Befestigungsstege aufweist. Mittels in Ausnehmungen in den Befestigungsstegen eingreifenden Bolzen oder Schrauben wird die Abdeckung an der Lenkradnabe oder dem Armaturenbrett befestigt. Um zu verhindern, daß durch Vibrationen im Fahrzeug während dessen Betriebs sich die Ausnehmungen im nachgiebigen Kunststoff bleibend aufweiten, werden, wie dies aus der gattungsbildenden US-A-5 118 132 bekannt ist, Verstärkungsleisten in die Befestigungsstege eingebettet, wodurch sich die auf die einzelne Ausnehmung einwirkenden Kräfte reduzieren.

Die Erfindung schafft eine Gassack-Abdeckung, bei noch höhere Kräfte in die Ausnehmungen eingeleitet werden können und bei der ein Aufweiten der Ausnehmung nahezu ausgeschlossen ist. Dies wird bei einer Abdeckung der eingangs genannten Art erfindungsgemäß dadurch erreicht, daß die Abdeckung ein die Ausnehmung innenseitig vollständig auskleidendes Verstärkungsteil aufweist und das Verstärkungsteil als Formteil ausgebildet ist. Dadurch können die Verstärkungsteile die vom Befestigungsmittel auf den Befestigungssteg ausgeübten Kräfte großflächig in diesen einleiten. Ferner können weniger Befestigungsmittel vorgesehen sein, so daß sich die Montagezeit der Abdeckung verringert.

Vorzugsweise ist das Verstärkungsteil in den Befestigungssteg formschlüssig eingebettet. Beim Vorsehen einer Durchgangsöffnung im Befestigungssteg ist das Verstärkungsteil vorzugsweise ein Hohlniet, der die Ausnehmung innenseitig vollständig auskleidet. Sind hingegen mehrere Durchgangsöffnungen vorgesehen, kann es einfacher sein, wenn die Verstärkung als zweilagige Platte ausgebildet ist, deren Lagen beabstandet und mit Hülsen verbunden sind, wobei jede Hülse die entsprechende Ausnehmung innenseitig auskleidet. Die vom Befestigungsmittel auf den Befestigungssteg ausgeübte Kraft wird damit großflächig in diesen eingeleitet.

Weitere Merkmale und Vorteile der Erfindung ergeben sich aus der nachfolgenden Beschreibung zweier Ausführungsbeispiele und aus den Zeichnungen, auf die Bezug genommen wird. In den Zeichnungen zeigen:
- Figur 1 einen Teilschnitt durch die erfindungsgemäße Gassack-Abdeckung gemäß einer ersten Ausführungsform; und
- Figur 2 einen Teilschnitt durch die erfindungsgemäße Gassack-Abdeckung gemäß einer zweiten Ausführungsform.

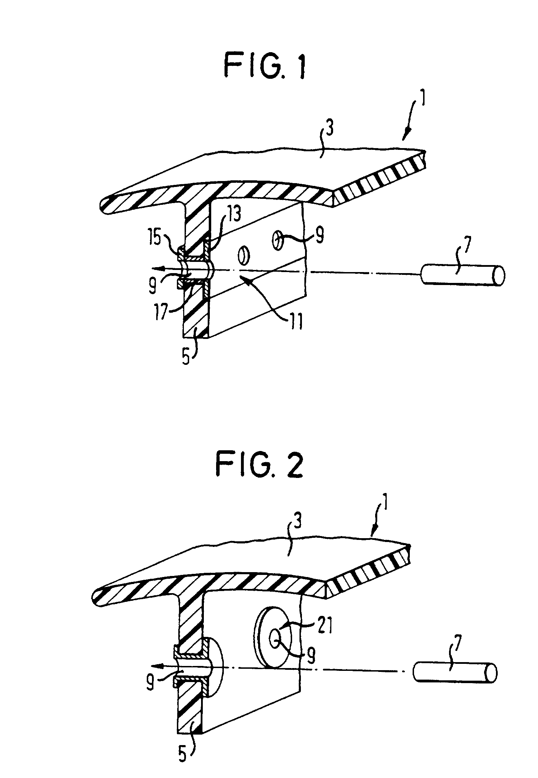

In Figur 1 ist eine Gassack-Abdeckung 1 gezeigt, die die Öffnung in einem Armaturenbrett, in dem ein Gassack-Modul eingebaut ist, verschließt. Die Abdeckung 1 ist ein gespritztes Kunststofformteil und weist eine außenseitige Wandung 3 auf, die in Farbe und Oberflächenstruktur der des Armaturenbretts entspricht. Von der Innenseite der Wandung 3 steht ein einstückig an sie angeformter Befestigungssteg 5 ab. Dieser dient der Arretierung der Abdeckung 1 am Fahrzeug. Befestigungsmittel 7 in Form von Bolzen oder Schrauben müssen hierzu in im Befestigungssteg 5 vorgesehene Durchgangslöcher 9 und in nicht gezeigte Öffnungen in einem fahrzeugfesten Teil gesteckt und axial gesichert oder eingedreht werden. Ein Verstärkungsteil 11 in Form eines Formteils dient dazu, die Durchgangslöcher 9 gegen Ausreißen oder Aufweiten aufgrund von Vibrationen während des Fahrbetriebs zu verstärken.

Das Verstärkungsteil 11 ist gemäß Figur 1 als zweilagige Platte aus Metall ausgebildet, deren Lagen 13, 15 voneinander beabstandet und durch Zwischenteile in Form von Hülsen 17 miteinander verbunden sind. Das Verstärkungsteil 11 ist in den Befestigungssteg 5 formschlüssig so eingebettet, daß die Hülsen 17 außenseitig von Kunststoff umgeben und die Lagen 13, 15 an der Außenseite des Befestigungsstegs 5 angeordnet sind. Die Einleitung von Zugkräften in die Abdeckung 1 erfolgt großflächig über das Verstärkungsteil 11, so daß weniger Durchgangsöffnungen 9 und Befestigungsmittel 7 vorgesehen sein können als bei einer Abdeckung ohne Verstärkungsteil 11. Da das Verstärkungsteil 11 die Durchgangsöffnungen 9 innenseitig vollständig auskleidet, werden die Durchgangsöffnungen 9 auch nicht durch Vibrationen aufgeweitet, wodurch es zum Lockern der Abdeckung 1 kommen könnte.

Die in Figur 2 dargestellte Ausführungsform der Abdeckung 1 unterscheidet sich von der in Figur 1 gezeigten darin, daß jede Durchgangsöffnung 9 ein eigenes Verstärkungsteil 21 in Form eines Hohlniets aufweist, der nach dem Spritzen der Abdeckung 1 am Befestigungssteg 5 arretiert werden kann oder beim Spritzen der Abdeckung 1 in den Befestigungssteg 5 eingebettet wird.

## Patentansprüche

1. Gassack-Abdeckung aus nachgiebigem Material, insbesondere aus gespritztem, geschäumtem oder gegossenem Kunststoff, mit wenigstens einem angeformten, abstehenden Befestigungssteg (5), der wenigstens eine als Durchgangsöffnung ausgebildete Ausnehmung (9) aufweist, in die ein Befestigungsmittel (7) zur Arretierung der Abdeckung (1) am Fahrzeug eingreift, **dadurch gekennzeichnet, daß** die Abdeckung (1) ein die Ausnehmung (9) innenseitig vollständig auskleidendes Verstärkungsteil (11; 21) aufweist und das Verstärkungsteil (11; 21) als Formteil ausgebildet ist.

2. Gassack-Abdeckung nach Anspruch 1, **dadurch gekennzeichnet, daß** das Verstärkungsteil (11; 21) in den Befestigungssteg (5) formschlüssig eingebettet ist.

3. Gassack-Abdeckung nach Anspruch 1 oder 2, **dadurch gekennzeichnet, daß** das Verstärkungsteil (11) als zweilagige Platte ausgebildet ist, deren Lagen (13, 15) voneinander beabstandet und mit wenigstens einer angeformten Hülse (17) verbunden sind, wobei die Hülse (17) die Ausnehmung (9) innenseitig auskleidet.

4. Gassack-Abdeckung nach Anspruch 3, **dadurch gekennzeichnet, daß** die Lagen (13, 15) an den Außenflächen des Befestigungsstegs (5) angeordnet sind.

5. Gassack-Abdeckung nach Anspruch 1 oder 2, **dadurch gekennzeichnet, daß** die Ausnehmung (9) durch einen Hohlniet (21), der das Verstärkungsteil bildet, ausgekleidet ist.

## Claims

1. A gas bag cover of pliant material, more particularly of injection-molded, foamed or cast plastics material, comprising at least one integrally molded, protruding fastener web (5) including at least one recess (9) which is formed as a through-opening and in which a fastener means (7) engages for arresting the cover (1) to the vehicle, **characterized in that** the cover (1) comprises a reinforcement part (11; 21) which completely lines the recess (9) on the inside and that the reinforcement part (11; 21) is configured as a shaped part.

2. The gas bag cover as set forth in claim 1, **characterized in that** the reinforcement part (11; 21) is embedded in the fastener web (5) in a form-fitting manner.

3. The gas bag cover as set forth in claim 1 or 2, **characterized in that** the reinforcement part (11) is configured as a double-layer plate, the layers (13, 15) of which being spaced from each other and being connected by at least one integrally formed sleeve (17), the sleeve (17) lining the recess (9) on the inside.

4. The gas bag cover as set forth in claim 3, **characterized in that** the layers (13, 15) are arranged on the outer surfaces of the fastener web (5).

5. The gas bag cover as set forth in claim 1 or 2, **characterized in that** the recess (9) is lined by a hollow rivet (21) which forms the reinforcement part.

## Revendications

1. Couvercle de sac à gaz en un matériau déformable, en particulier en une matière plastique injectée, moussée ou coulée, avec au moins une nervure de fixation (5) formée en saillie, qui présente au moins un évidement (9) réalisé sous forme d'un orifice de passage, dans lequel vient en prise un moyen de fixation (7), qui sert à bloquer le couvercle (1) sur le véhicule, **caractérisé en ce que** le couvercle (1) présente une pièce de renforcement (11; 21) qui revêt complètement l'évidement (9) du côté intérieur et **en ce que** la pièce de renforcement (11; 21) est réalisée sous forme de pièce formée.

2. Couvercle de sac à gaz selon la revendication 1, **caractérisé en ce que** la pièce de renforcement (11; 21) est noyée dans la nervure de fixation (5) par coopération de formes.

3. Couvercle de sac à gaz selon l'une des revendications 1 ou 2, **caractérisé en ce que** la pièce de renforcement (11) est réalisée sous forme d'une plaque à deux couches, dont les couches (13, 15) sont montées à une certaine distance l'une de l'autre et sont reliées par au moins une douille (17) intégralement formée, la douille (17) revêtant l'évidement (9) du côté intérieur.

4. Couvercle de sac à gaz selon la revendication 3, **caractérisé en ce que** les couches (13, 15) sont disposées sur les faces extérieures de la nervure de fixation (5).

5. Couvercle de sac à gaz selon l'une des revendications 1 ou 2, **caractérisé en ce que** l'évidement (9) est revêtu par un rivet creux (21), qui constitue la pièce de renforcement.
